(19) Europäisches Patentamt
European Patent Office
Office européen des brevets

(11) EP 4 395 115 A1

(12) EUROPEAN PATENT APPLICATION
published in accordance with Art. 153(4) EPC

(43) Date of publication:
03.07.2024 Bulletin 2024/27

(51) International Patent Classification (IPC):
H02J 7/00 (2006.01)     H01M 10/44 (2006.01)
H02M 3/00 (2006.01)

(21) Application number: 23798074.3

(22) Date of filing: 06.11.2023

(86) International application number:
PCT/KR2023/017682

(87) International publication number:
WO 2024/101824 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.11.2022 KR 20220146779
06.12.2022 KR 20220169012

(71) Applicant: Samsung Electronics Co., Ltd.
Suwon-si, Gyeonggi-do 16677 (KR)

(72) Inventors:
• KANG, Sangwoo
Suwon-si, Gyeonggi-do 16677 (KR)
• LEE, Kyunghwan
Suwon-si, Gyeonggi-do 16677 (KR)

(74) Representative: Gulde & Partner
Patent- und Rechtsanwaltskanzlei mbB
Wallstraße 58/59
10179 Berlin (DE)

(54) ELECTRONIC DEVICE COMPRISING PLURALITY OF BATTERIES AND OPERATING METHOD THEREFOR

(57) An electronic device according to an embodiment may include a first battery, a second battery, a first charging circuit configured to provide power of a first voltage to the first battery, a second charging circuit configured to provide power of a second voltage to the second battery, a first limiter disposed between the first battery and the second charging circuit, and a processor. The processor according to an embodiment may be configured to identify the first voltage to be applied to the first battery. The processor according to an embodiment may be configured to request power of an input voltage corresponding to twice the first voltage from an external power source based on the first voltage, The processor according to an embodiment may be configured to, based on applying the input voltage corresponding to twice the first voltage provided from the external power source to the first charging circuit, control the first charging circuit to supply the power of the first voltage to the first battery. The processor according to an embodiment may be configured to, based on applying the input voltage corresponding to twice the first voltage provided from the external power source to the second charging circuit, control the second charging circuit to supply the power of the second voltage to the second battery.

FIG. 5A

## Description

### [Technical Field]

An embodiment of the disclosure relates to an electronic device including a plurality of batteries and a method of operating the same.

### [Background Art]

In recent years, the use of portable electronic devices such as smartphones, tablet PCs, wearable devices, or augmented reality (AR) glasses has increased. Along with the rapidly increased use of electronic device, there has been an active research effort on batteries to extend their use time. These electronic devices may be configured to use a plurality of batteries to receive more power stably.

### [Disclosure of Invention]

### [Solution to Problems]

An electronic device according to an embodiment includes a first battery, a second battery, a first charging circuit configured to provide power of a first voltage to the first battery, a second charging circuit configured to provide power of a second voltage to the second battery, a first limiter disposed between the first battery and the second charging circuit, and a processor. The processor according to an embodiment is configured to identify the first voltage to be applied to the first battery. The processor according to an embodiment is configured to request power of an input voltage corresponding to twice the first voltage from an external power source based on the first voltage. The processor according to an embodiment is configured to, based on applying the input voltage corresponding to twice the first voltage provided from the external power source to the first charging circuit, control the first charging circuit to supply the power of the first voltage to the first battery. The processor according to an embodiment is configured to, based on applying the input voltage corresponding to twice the first voltage provided from the external power source to the second charging circuit, control the second charging circuit to supply the power of the second voltage to the second battery.

A method of operating an electronic device including a first battery and a second battery according to an embodiment includes identifying a first voltage to be applied to the first battery. The method of operating the electronic device according to an embodiment includes requesting power of an input voltage corresponding to twice the first voltage from an external power source based on the first voltage. The method of operating the electronic device according to an embodiment includes, based on applying the input voltage corresponding to twice the first voltage provided from the external power source to a first charging circuit included in the electronic device, controlling the first charging circuit to supply power of the first voltage to the first battery. The method of operating the electronic device according to an embodiment includes, based on applying the input voltage corresponding to twice the first voltage provided from the external power source to a second charging circuit included in the electronic device, controlling the second charging circuit to supply power of a second voltage to the second battery.

A non-transitory recording medium (130) storing instructions capable of executing a method comprising identifying a first voltage to be applied to a first battery included in an electronic device, requesting power of an input voltage corresponding to twice the first voltage from an external power source based on the first voltage, based on applying the input voltage corresponding to twice the first voltage provided from the external power source to a first charging circuit included in the electronic device, controlling the first charging circuit to supply power of the first voltage to the first battery, and based on applying the input voltage corresponding to twice the first voltage provided from the external power source to a second charging circuit included in the electronic device, controlling the second charging circuit to supply power of a second voltage to a second battery included in the electronic device.

### [Brief Description of Drawings]

FIG. 1 is a block diagram illustrating an electronic device in a network environment according to an embodiment.
FIG. 2 is a block diagram illustrating a configuration of an electronic device according to an embodiment.
FIG. 3 is a block diagram illustrating a configuration of an electronic device including a plurality of batteries connected in parallel by a flexible printed circuit board (FPCB) according to an embodiment.
FIG. 4 is a diagram referred to for describing loss in a first limiter, when a plurality of batteries are charged in a conventional electronic device according to a comparative embodiment.
FIG. 5A is a block diagram illustrating a plurality of charging circuits and a plurality of batteries included in an electronic device according to an embodiment.
FIG. 5B is a circuit diagram illustrating a plurality of charging circuits and a plurality of batteries included in an electronic device according to an embodiment.
FIG. 6 is a flowchart illustrating an operation of charging a plurality of batteries in an electronic device according to an embodiment.
FIG. 7A is a flowchart illustrating an operation of turning on or off a switch in a limiter, when a plurality of batteries are charged in an electronic device according to an embodiment.

FIG. 7B is a flowchart illustrating an operation of turning on or off a switch in a limiter, when a plurality of batteries are charged in an electronic device according to an embodiment.

FIG. 8A and 8B are graphs depicting an input voltage of a first charging circuit and a second charging circuit, an output voltage of the first charging circuit, and an output voltage of the second charging circuit according to an embodiment.

FIG. 9 is a table listing conditions under which an electronic device turns on or off a switch in a limiter according to an embodiment.

FIG. 10 is a flowchart illustrating an operation of turning on or off a switch in a limiter based on a limiter voltage in an electronic device according to an embodiment.

FIG. 11 is a flowchart illustrating an operation of turning on or off a switch in a limiter based on a second battery current in an electronic device according to an embodiment.

FIG. 12 is a flowchart illustrating an operation of turning on or off a switch in a limiter based on an input current of a second charging circuit in an electronic device according to an embodiment.

**[Mode for the Invention]**

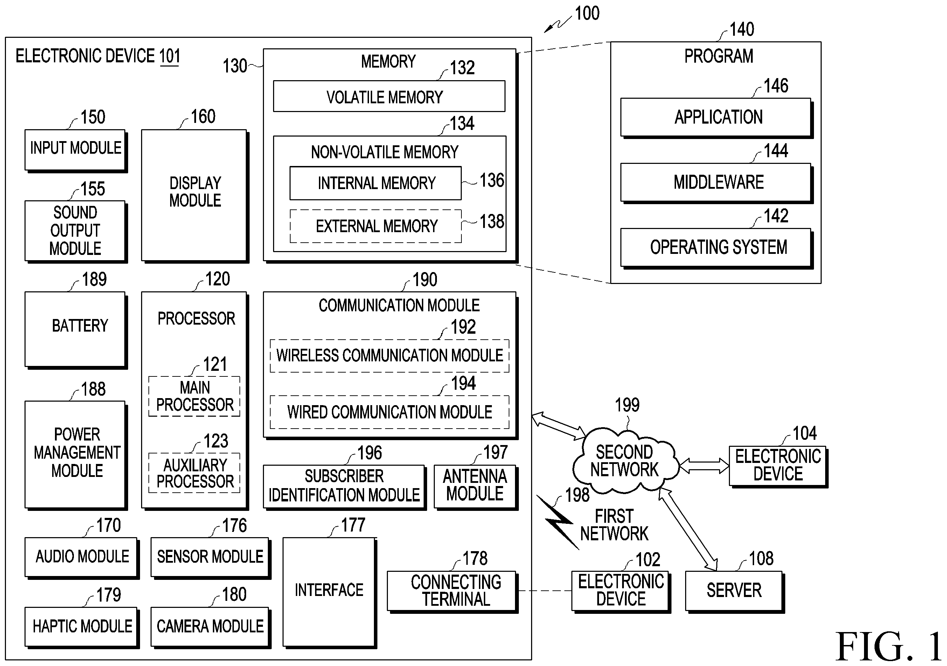

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

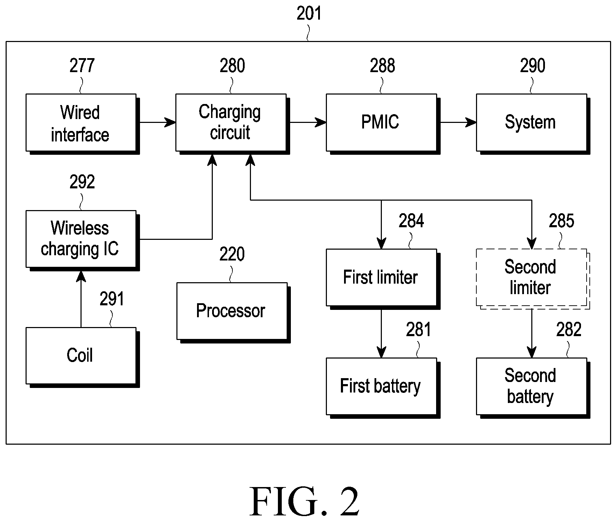

FIG. 2 is a block diagram illustrating a configuration of an electronic device according to an embodiment.

Referring to FIG. 2, an electronic device 201 (e.g., the electronic device 101 of FIG. 1) according to an embodiment may include a processor 220 (e.g., the processor 120 of FIG. 1), a wired interface 277 (e.g., the interface 177 of FIG. 1), a charging circuit 280, a first battery 281 (e.g., the battery 189 of FIG. 1), a second battery 282 (e.g., the battery 189 of FIG. 1), a first limiter 284, a PMIC 288, a coil 291, and/or a wireless charging integrated circuit (IC) 292. The electronic device 201 according to an embodiment may further include a second limiter 285 depending on implementation. The electronic device 201 according to an embodiment may be configured to further include various components or exclude/omit some of the above components, not limited to the above components. The electronic device 201 according to an embodiment may further include all or a part of the electronic device 101 illustrated in FIG. 1.

The wired interface 277 according to an embodiment may include a connector (e.g., a USB port) for connecting to a wired power transmitter (a travel adapter (TA)) that supplies power wiredly. For example, the wired interface 277 may include a power delivery (PD) IC to receive power wiredly.

The charging circuit 280 according to an embodiment may perform a charging operation on the first battery 281 and/or the second battery 282 based on power being supplied through the wired interface 277 or the wireless charging IC 292. The charging circuit 280 according to an embodiment may supply power to a load (e.g., a system 290 or the batteries 281 and 282) based on power being supplied through the wired interface 277 or the wireless charging IC 292. For example, the system 290 may refer to components requiring power in the electronic device 201. The charging circuit 280 may comprise a plurality of sub-charging circuits.

The charging circuit 280 according to an embodiment may convert the power supplied through the wired interface 277 or the wireless charging IC 292 into a form required for the first battery 281 and/or the second battery 282. The charging circuit 280 may supply the converted power to the first battery 281 and/or the second battery 282. For example, the charging circuit 280 may support fast charging. For example, the charging circuit 280 may include a first charging circuit and a second charging circuit for supplying power to the first battery 281 and/or the second battery 282. For example, the charging circuit 280 may include the first charging circuit to generate or convert to power supplied to the first battery 281 and the second charging circuit to generate or convert to power supplied to the second battery 282. The charging circuit 280 may include a direct charger and/or a resonant direct charger.

According to an embodiment, the charging circuit 280 may provide power supplied from the first battery 281 or the second battery 282 to components included in the electronic device 201. Additionally, the charging circuit 280 may convert power supplied from an external power source and then provide the converted power to components included in the electronic device 201. The charging circuit 280 may also provide power supplied from the external power source to the first battery 281 and/or the second battery 282.

According to an embodiment, the charging circuit 280 may supply power of a first current (or first voltage) to the first battery 281 via a first path, based on the power supplied from the external power source. The charging circuit 280 may supply a power of a second current (or second voltage) to the second battery 282 via a second path, based on the power supplied from the external power source. For example, the charging circuit 280 may apply the first current and the second current to the first battery 281 and the second battery 282 based on rated currents of the first battery 281 and the second battery 282. Further, the charging circuit 280 may apply the first voltage and the second voltage to the first battery 281 and the second battery 282, respectively, according to rated voltages of the first battery 281 and the second battery 282.

At least one of the first battery 281 and the second battery 282 according to an embodiment may include a battery pack into which battery cells are packed. For example, the battery pack may be a product with a housing including battery cells.

According to an embodiment, the electronic device 201 may be implemented as a foldable electronic device including a flexible display (e.g., the display module 160 of FIG. 1). The electronic device 201 may include a first housing and a second housing connected to each other by a hinge. The electronic device 201 may be folded or unfolded by the hinge. The first battery 281 may be disposed in the first housing, and the second battery 282 may be disposed in the second housing. The first battery 281 may be connected to the second battery 282 through a flexible printed circuit board (FPCB).

Each of the first battery 281 and the second battery 282 according to an embodiment may be charged based on power supplied from the charging circuit 280. Additionally, each of the first battery 281 and the second battery 282 may be discharged by supplying the charged power to the components of the electronic device 201. For example, the first battery 281 and the second battery 282 may have the same or different charge capacities. Further, the first battery 281 and the second battery 282 may have the same or different magnitudes of an allowed current (or threshold current). For example, the first battery 281 may be a main battery, and the second battery 282 may be a sub-battery, wherein the sub-battery has a lower capacity than the main battery.

The first limiter 284 according to an embodiment may be disposed between the first battery 281 and the charging circuit 280. The first limiter 284 may limit a current flow provided to the first battery 281. For example, when the first current applied to the first battery 281 exceeds a first threshold current of the first battery 281, the first limiter 284 may reduce the magnitude of the first current. For example, the processor 220 may reduce the magnitude of the first current by increasing the resistance of at least one field effect transistor (FET) (e.g., N-type FET) included in the first limiter 284. For example, the first limiter 284 may include a gate driver for controlling the at least one FET and a control circuit for controlling the gate driver. The processor 220 may increase or decrease the resistance of the at least one FET included in the first limiter 284 by controlling the control circuit. Alternatively, the processor 220 may turn on or off the at least one FET included in the first limiter 284 by controlling the control circuit.

The second limiter 285 according to an embodiment may be disposed between the second battery 282 and the charging circuit 280. Depending on implementation, however, the electronic device 201 may not include the second limiter 285 and hence, a current flow from the charging circuit 280 is not altered. However, is present, the second limiter 285 may limit a current flow provided to the second battery 282. For example, when the second current exceeds a second threshold current of the second battery 282, the second limiter 285 may reduce the magnitude of the second current applied to the second battery 282. For example, the processor 220 may reduce the magnitude of the second current by increasing the resistance of at least one FET (e.g., N-type FET) included in the second limiter 285. Alternatively, the processor 220 may turn on or off the at least one FET included in the second limiter 285.

The PMIC 288 according to an embodiment may manage power of the electronic device 201. The PMIC 288 may control normal legacy charging and fast charging. For example, the PMIC 288 may provide power received from the charging circuit 280 to components (e.g., the processor 220) of the electronic device 201. According to an embodiment, at least some of the functions of the PMIC 288 may be performed by the processor 220.

The processor 220 (e.g., AP) according to an embodiment may provide overall control to the electronic device 201. For example, the processor 220 may be implemented the same as or similar to the processor 120 of FIG. 1.

According to an embodiment, the processor 220 may identify the first voltage to be applied to (or required for) the first battery 281. For example, the first voltage may be a voltage required for the first battery 281. The processor 220 may request power of a voltage corresponding to twice the first voltage from an external power source (e.g., a power transmitter) based on the first voltage to be applied to the first battery 281. For example, the processor 220 may transmit a message requesting application of power of a voltage corresponding to twice the first voltage to the charging circuit 280 to the PD IC included in the wired interface 277. The PD IC may request the external power source to supply the power based on the received message. For example, the message may include a command to adjust the magnitude of a current or voltage provided by the external power source.

According to an embodiment, when an input voltage corresponding to twice the first voltage, provided by the external power source, is applied to the charging circuit 280, the processor 220 may control the charging circuit 280 to supply power of the first voltage to the first battery 281 and power of the second voltage to the second battery 282. For example, the processor 220 may determine the magnitude of a voltage applied to the charging circuit 280 based on a voltage to be applied to the first battery 281. Depending on a number of batteries, the value of the input voltage may be chosen to correspond to a value that is different from being twice a first voltage.

The coil 291 according to an embodiment may receive an alternating current (AC) induced between it and an external wireless power transmitter. The wireless charging IC 292 may generate power using the AC received by the coil 291 and supply the power to the charging circuit 280.

The charging circuit 280 according to an embodiment may perform a charging operation on the first battery 281 and/or the second battery 282 based on power supplied through the wired interface 277 and/or power supplied from the wireless charging IC 292.

The electronic device 201 according to an embodiment may further include a memory (e.g., the memory 130 of FIG. 1) and/or a communication module (e.g., the communication module 190 of FIG. 1).

The memory according to an embodiment may store a program (e.g., the program 140 of FIG. 1) used to control charging and discharging of each of the first battery 281 and the second battery 282 and various data generated during execution of the program 140. For example, the memory may be implemented the same as or similar to the memory 130 of FIG. 1.

The communication module according to an embodiment may perform communication under the control of the processor 220. For example, the communication module may perform communication with a power transmitter (e.g., a wired power transmitter or a wireless power transmitter) to receive power under the control of the processor 220. For example, the communication module may be implemented the same as or similar to the communication module 190 of FIG. 1.

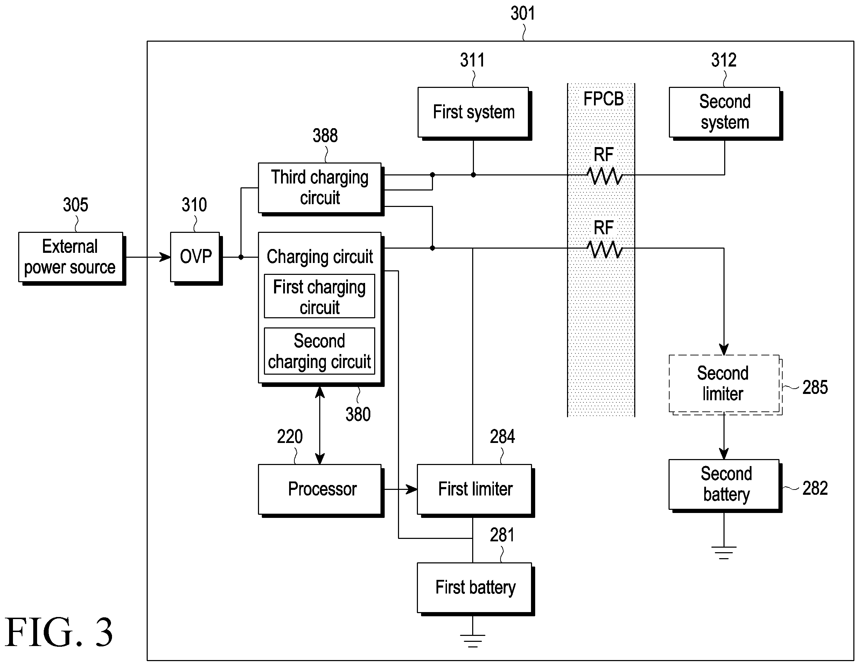

FIG. 3 is a block diagram illustrating a configuration of an electronic device including a plurality of batteries connected in parallel by an FPCB according to an embodiment. The electronic device of FIG. 3 is not limited to the following component but may be configured to further include various components and/or to omit some of the following components.

Referring to FIG. 3, according to an embodiment, an electronic device 301 (e.g., the electronic device 201 of FIG. 2) may include an over voltage protector (OVP) 310, a first system 311, a second system 312, the processor 220, a charging circuit 380, a third charging circuit 388, the first battery 281, the second battery 282, and the first limiter 284. The electronic device 301 may further include the second limiter 285 depending on implementation. For example, the processor 220, the first battery 281, the second battery 282, the first limiter 284, and the second limiter 285 may be implemented the same as the processor 220, the first battery 281, the second battery 282, the first limiter 284, and the second limiter 285 described with reference to FIG. 2.

According to an embodiment, the OVP 310 may function to protect the charging circuit 380 from power supplied from an external power source (e.g., TA) 305. For example, the OVP 310 may perform an over voltage protection function. For example, the OVP 310 may block power having a voltage higher than a specified voltage.

According to an embodiment, the third charging circuit 388 may convert power supplied from the external power source 305 or the plurality of batteries 281 and 282 and supply the converted power to the first system 311 and the second system 312. For example, the third charging circuit 388 may convert the power into a form required for the first system 311 and the second system 312. For example, the third charging circuit 388 may be implemented as a DC/DC converter (e.g., a buck booster, a buck converter, or a buck-boost converter). For example, the first system 311 and the second system 312 may refer to components of the electronic device 301. For example, by means of the third charging circuit 388, power may be directly supplied to the first system 311 and the second system 312. For example, the first system 311 may refer to components of the electronic device 301 included in a first housing. The second system 312 may refer to components of the electronic device 301 included in a second housing. For example, the first system 311 and the second system 312 may be implemented the same as the system 290 of FIG. 2.

According to an embodiment, the electronic device 301 may be implemented as a foldable electronic device including a flexible display. The electronic device 301 may be folded or unfolded by a hinge. The electronic device 301 may include the first housing and the second housing connected to each other by the hinge. According to an embodiment, the first battery 281 and the first system 311 may be disposed in the first housing, and the second battery 282 and the second system 312 may be disposed in the second housing. The first battery 281 and the first system 311 may be connected to the second battery 282 and the second system 312 through an FPCB. For example, a second path of supplying power from the charging circuit 380 to the second battery 282 may include resistance RF caused by the FPCB.

According to an embodiment, the charging circuit 380 may receive power from the external power source 305 through the OVP 310. The charging circuit 380 may generate power to charge the first battery 281 and the second battery 282 based on the received power. The charging circuit 380 may include a first charging circuit capable of supplying power to the first battery 281 and a second charging circuit capable of supplying power to the second battery 282. For example, the first charging circuit and the second charging circuit may include a direct charger circuit (e.g., a switched capacitor type). For example, the first charging circuit and the second charging circuit may be different types of charging circuits.

According to an embodiment, the processor 220 may identify a first voltage to be applied to the first battery 281. The processor 220 may request power of a voltage corresponding to twice the first voltage from the external power source 305 (e.g., power transmitter) based on the first voltage to be applied to the first battery 281. This may allow the electronic device 301 to determine the magnitude of a voltage applied to the charging circuit 380 based on the first voltage to be applied to the first battery 281.

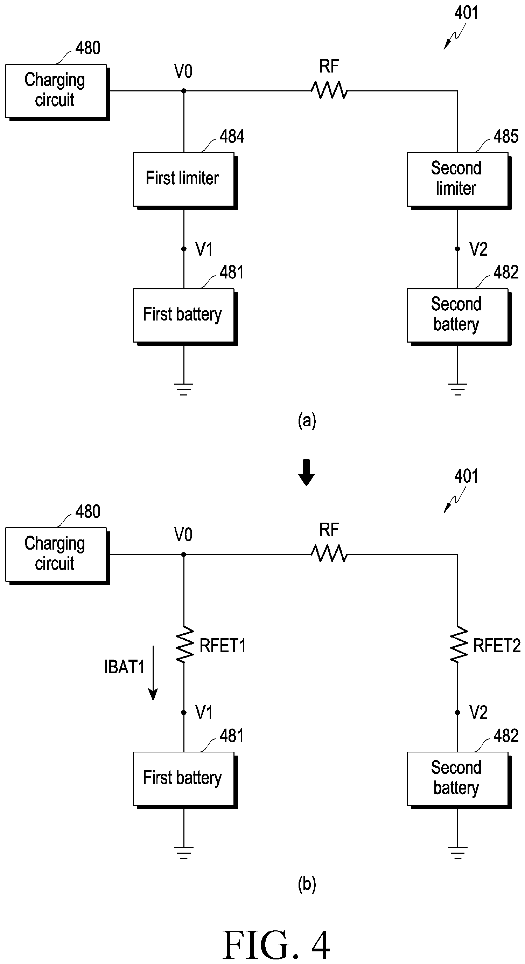

FIG. 4 is a diagram referred to for describing loss occurring in a first limiter, when a plurality of batteries are charged in a conventional electronic device according to a comparative embodiment.

Referring to FIG. 4, a conventional electronic device 401 according to a comparative embodiment may determine the magnitude of a battery voltage V0 output from a charging circuit 480 based on a second voltage V2 applied to a second battery 482.

Due to resistance RF caused by an FPCB and different positions at which a first battery 481 and the second battery 482 are mounted, resistance of a first power path between the charging circuit 480 and the first battery 481 may be different from resistance of a second power path between the charging circuit 480 and the second battery 482. As a result, each of the batteries 481 and 482 may require a different voltage for power charging at a given rated current. However, the charging circuit 480 may apply the same battery voltage V0 to the batteries 481 and 482.

The conventional electronic device 401 according to the comparative embodiment may determine the battery voltage V0 based on the higher of the voltages required for the batteries 481 and 482. For example, because the resistance of the second power path to the second battery 482 is higher than the resistance of the first power path to the first battery 481, the second battery 482 may require a higher voltage V2 than a voltage V1 required by the first battery 481. However, a higher voltage than the voltage V1 required by the first battery 481 may then also be applied to the first power path to the first battery 481. Accordingly, a current greater than a rated current of the first battery 481 may be applied to the first battery 481, and thus the first limiter 484 may limit the current conducted from the charging circuit 480 to the first battery 481. Because the first limiter 484 may be implemented as a linear regulator, power loss may occur in the form of resistance RFET1 in the first limiter 484.

For example, a voltage across the first limiter 484 may be the difference between the battery voltage V0 output from the charging circuit 480 and the voltage V1 applied to the first battery 481. For example, a power consumption PFET (not shown in FIG. 4) of the first limiter 484 may be determined by Equation 1 below. For example, IBAT1 may be a current applied to the first battery 481.

[Equation 1]

$$PFET=(V0-V1)*IBAT1$$

As described in Equation 1 above, the power consumption of the first limiter 484 may be proportional to the magnitude of the voltage across the first limiter 484. For example, the battery voltage V0 output from the charging circuit 480 may become higher during fast charging. In this case, the magnitude of the voltage across the first limiter 484 may also increase, and the power consumption PFET of the first limiter 484 may also increase.

The charging circuit 480 may determine the battery voltage V0 based on the voltage V2 required for the second battery 482. A voltage similar to the voltage V2 required for the second battery 482 may be applied to the second power path to the second battery 482. Accordingly, the second limiter 485 may experience less power loss than the first limiter 481. However, the second limiter 485 may also be implemented as a linear regulator, and thus power loss may occur in the form of resistance RFET2 in the second limiter 485.

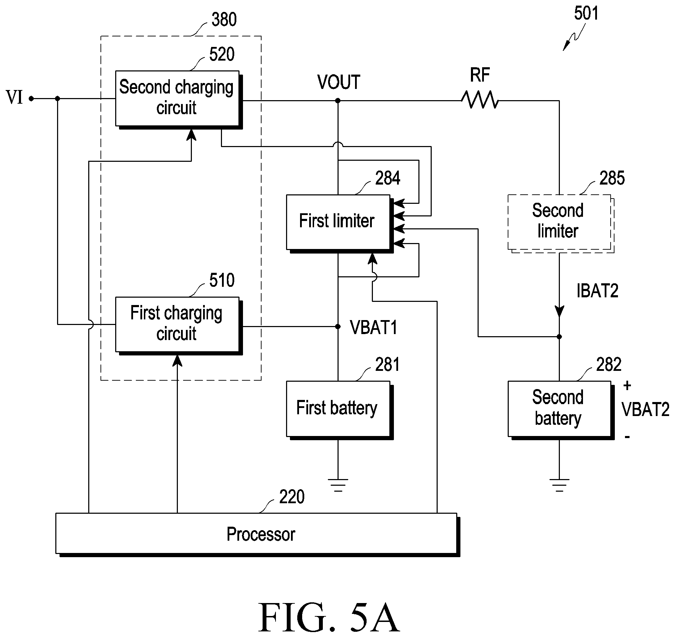

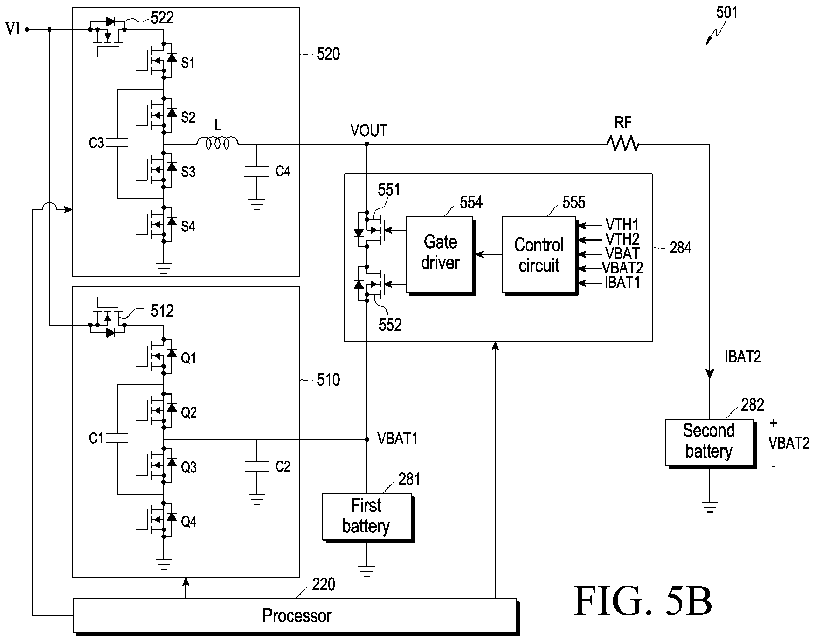

The electronic devices 201, 301, and 501 each including batteries arranged in parallel according to an embodiment may include different circuits from those of the conventional electronic device 401 according to the comparative embodiment, and thus reduce the power consumptions of the limiters. Specific circuits of the electronic devices 201, 301, and 501 will be described below with reference to FIGS. 5A and 5B.

FIG. 5A is a block diagram illustrating a plurality of charging circuits and a plurality of batteries included in an electronic device according to an embodiment.

Referring to FIG. 5A, according to an embodiment, the electronic device 501 may be implemented the same as or similar to the electronic device 201 of FIG. 2 and the electronic device 301 of FIG. 3.

According to an embodiment, the charging circuit 380 may include a plurality of charging circuits (e.g., a first charging circuit 510 and a second charging circuit 520). For example, the plurality of charging circuits (e.g., the first charging circuit 510 and the second charging circuit 520) may be implemented to be included in the charging circuit 380. Alternatively, the plurality of charging circuits (e.g., the first charging circuit 510 and the second charging circuit 520) may be provided in the electronic device 501, instead of in the charging circuit 380.

According to an embodiment, the processor 220 may identify a first voltage VBAT1 to be applied to the first battery 281. For example, the first voltage VBAT1 may be a rated voltage of the first battery 281. The processor 220 may request an external power source (e.g., the external power source 305 of FIG. 3) to supply power of an input voltage VI corresponding to twice the first voltage VBAT1, based on the identified first voltage VBAT1 (or the rated voltage of the first battery 281). Subsequently, the first charging circuit 510 and the second charging circuit 520 may receive the power of the input voltage VI that is twice the first voltage VBAT1 from the external power source 305.

According to an embodiment, the first charging circuit 510 and the second charging circuit 520 may independently supply power to the first battery 281 and the second battery 282, respectively. For example, the first charging circuit 510 and the second charging circuit 520 may receive the input voltage VI from the external power source (e.g., the external power source 305 of FIG. 3). For example, the magnitude of the input voltage VI may be twice or more than twice the magnitude of the first voltage VBAT1. The first charging circuit 510 may convert to and generate the first voltage VBAT1 required for the first battery 281 based on the input voltage VI. The second charging circuit 520 may convert to and generate an output voltage VOUT for a second voltage VBAT2 required for the second battery 282, based on the input voltage VI.

According to an embodiment, the first charging circuit 510 may supply power of the first voltage VBAT1 to the first battery 281 under the control of the processor (e.g., the processor 220 of FIG. 2 or 3). For example, the first charging circuit 510 may apply the first voltage VBAT1 to the first battery 281. For example, the first voltage may be the rated voltage of the first battery 281. For example, the first charging circuit 510 may be implemented as a direct charger configured to provide an unadjusted output voltage. Or, in other words, the first charging circuit 510 is unable to adjust the output voltage. The first charging circuit 510 may apply the first voltage VBAT1 having half of the magnitude of the input voltage VI to the first battery 281.

According to an embodiment, the second charging circuit 510 may supply the second voltage VBAT2 to the second battery 282 under the control of the processor 220. For example, the second charging circuit 520 may apply the output voltage VOUT to a second power path to the second battery 282. The second battery 282 may receive the second voltage VBAT2 by the output voltage VOUT. For example, the second voltage VBAT2 may be a rated voltage of the second battery 282. For example, the second charging circuit 520 may be implemented as a direct charger (e.g., a resonant direct charger) configured to adjust output. The second charging circuit 520 may convert the input voltage VI to the output voltage VOUT such that the second voltage VBAT2 is applied to the second battery 282. For example, during charging, the output voltage VOUT may be higher than the second voltage VBAT2 due to the resistance RF caused by the FPCB.

According to an embodiment, the first limiter 284 may be disposed between the first battery 281 and the second charging circuit 520. The first limiter 284 may be turned on or off under the control of the processor 220. For example, to allow the first charging circuit 510 and the second charging circuit 520 to operate independently, the first limiter 284 may isolate voltages output from of the first charging circuit 510 and the second charging circuit 520 from each other. In other words, voltages output from of the first charging circuit 510 and the second charging circuit 520 serve as input for the first limiter 284. To this end, the first limiter 284 may remain off during charging of the first battery 281 and the second battery 282. However, when a specific condition is satisfied, the first limiter 284 may be switched to an on state. For example, to identify whether the specific condition is satisfied, the first limiter 284 may obtain at least one of the output voltage VOUT, the first voltage VBAT1, a second battery current IBAT2 applied to the second battery 282, or a signal indicating a state of the second charging circuit 520, which may be directly provided by the second charging circuit 520.

According to an embodiment, the second limiter 285 may be further included in the electronic device 501 depending on implementation, i.e. optionally. The second limiter 285 may be disposed between the second battery 282 and the second charging circuit 520. The second limiter 285 may control a conducted current such that a current greater than a rated current of the second battery 282 is not applied to the second battery 282. Depending on implementation, the second limiter 285 may not be included in the electronic device 501. For example, since the second charging circuit 520 is capable of adjusting an output current, the electronic device 501 may adjust a current applied to the second battery 282 to or below the rated current of the second battery 282, without the second limiter 285.

FIG. 5B is a circuit diagram illustrating a plurality of charging circuits and a plurality of batteries included in an electronic device according to an embodiment.

Referring to FIG. 5B, the first charging circuit 510 may include a regulator 512, a first capacitor C1, a second capacitor C2, and a plurality of FETs Q1, Q2, Q3, and Q4 according to an embodiment.

According to an embodiment, the regulator 512 may rectify the input voltage VI and output the rectified input voltage VI to the plurality of FETs Q1, Q2, Q3, and Q4.

According to an embodiment, a first FET Q1 and a third FET Q3 may be turned off, and a second FET Q2 and a fourth FET Q4 may be turned on among the plurality of FETs Q1, Q2, Q3, and Q4 during a first time interval under the control of the processor 220. At this time, each of the first capacitor C1 and the second capacitor C2 may be charged with a voltage corresponding to the input voltage VI. Further, the first FET Q1 and the third FET Q3 may be turned on, and the second FET Q2 and the fourth FET Q4 may be turned off among the plurality of FETs Q1, Q2, Q3, and Q4, during a second time interval after the first time interval. At this time, the voltage corresponding to the input voltage VI charged in each of the first capacitor C1 and the second capacitor C2 may be output. The first charging circuit 510 may output the first voltage VBAT1 having half of the magnitude of the input voltage VI by alternately turning on and off the plurality of FETs Q1, Q2, Q3, and Q4 as described above.

According to an embodiment, the second charging circuit 520 may include a regulator 522, a third capacitor C3, a fourth capacitor C4, an inductor L, and a plurality of FETs S1, S2, S3, and S4.

According to an embodiment, the regulator 522 may rectify the input voltage VI and output the rectified input voltage VI to the plurality of FETs S1, S2, S3, and S4.

According to an embodiment, the first FET S1 and the third FET S3 may be turned off, and the second FET S2 and the fourth FET S4 may be turned on among the plurality of FETs S1, S2, S3, and S4 during a third time interval under the control of the processor 220. At this time, each of the third capacitor C3 and the fourth capacitor C4 may be charged with the voltage corresponding to the input voltage VI. Further, the first FET S1 and the third FET S3 may be turned on, and the second FET S2 and the fourth FET S4 may be turned off among the plurality of FETs S1, S2, S3, and S4 during a fourth time interval after the third time interval under the control of the processor 220. For example, the third time interval may be synchronized with the first time interval, and the fourth time interval may be synchronized with the second time interval. Alternatively, the third time interval may not be synchronized with the first time interval, and the fourth time interval may not be synchronized with the second time interval. At this time, the voltage corresponding to the input voltage VI charged in each of the third capacitor C3 and the second capacitor C3 may be output through voltage and/or current adjustment by the inductor L. The second charging circuit 520 may output the output voltage VOUT that enables the second voltage VBAT2 to be applied to the second battery 282, by alternately turning on and off the plurality of FETs Q1, Q2, Q3, and Q4 as described above. The processor 220 may also control a duty ratio of the plurality of FETs S1, S2, S3, and S4 to output the output voltage VOUT that enables the second voltage VBAT2 to be applied to the second battery 282.

According to an embodiment, the first limiter 284 may include a plurality of switches 551 and 552, a gate driver 554, and a control circuit 555. However, the first limiter 284 may comprise further components.

According to an embodiment, each of the plurality of switches 551 and 552 may be implemented as a FET device. For example, each of the plurality of switches 551 and 552 may be implemented as a different type of FET (e.g., an N-type metal oxide semiconductor field effect transistor (MOSFET) or a P-type MOSFET).

According to an embodiment, the gate driver 554 may turn off or on the plurality of switches 551 and 552 under the control of the control circuit 555. The control circuit 555 may control the gate driver 554 under the control of the processor 220. For example, the control circuit 555 may control the gate driver 554 to turn off or on the plurality of switches 551 and 552. The control circuit 555 may identify an off condition and/or an on condition for the plurality of switches 551 and 552, and turn on or off the plurality of switches 551 and 552 according to a result of the identification.

According to an embodiment, the control circuit 555 may control the gate driver 554 based on at least one of a first threshold VTH1, a second threshold VTH2, the output voltage VOUT, the first voltage VBAT1, or the second battery current IBAT2. For example, the control circuit 555 may identify the off condition and/or the on condition for the plurality of switches 551 and 552 based on the at least one of the first threshold VTH1, the second threshold VTH2, the output voltage VOUT, the first voltage VBAT1, or the second battery current IBAT2. For example, the first threshold VTH1 and the second threshold VTH2 may be reference values for determining on/off of the plurality of switches 551 and 552. For example, the processor 220 may set the first threshold VTH1 and the second threshold VTH2.

As described above, the electronic device 501 according to an embodiment may supply power to the first battery 281 and the second battery 282 by independently operating the first charging circuit 510 and the second charging circuit 520. The electronic device 501 may determine the magnitude of the input voltage VI applied to the first charging circuit 510 and the second charging circuit 520 based on the first voltage VBAT1 of the first battery 282. Further, when the first limiter 284 remains off during a charging operation, the first limiter 284 may scarcely cause power consumption. Accordingly, the electronic device 501 may reduce the power consumption of the first limiter 284. Additionally, the electronic device 501 may not include the second limiter 285. Therefore, the electronic device 501 may reduce cost, secure a mounting space, and reduce power consumption caused by the second limiter 285.

At least some of the operations of the electronic devices 201, 301, and 501 described below may be performed by the processor 220. However, for convenience of description, the electronic devices 201, 301, and 501 will be described as performing these operations.

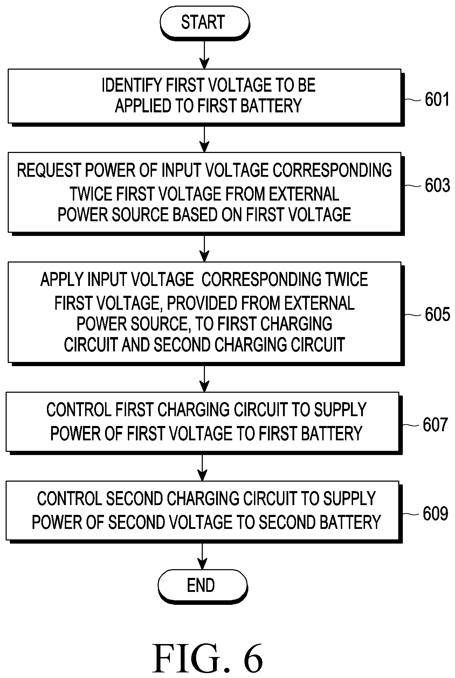

FIG. 6 is a flowchart illustrating an operation of charging a plurality of batteries in an electronic device according to an embodiment.

Referring to FIG. 6, according to an embodiment, the electronic device 201, 301, or 501 may identify a first voltage to be applied to the first battery 281 in operation 601. For example, the first voltage may be a rated voltage of the first battery 281.

According to an embodiment, in operation 603, the electronic device 201, 301, or 501 may request power of an input voltage corresponding to twice the first voltage from an external power source (e.g., the external power source 305 of FIG. 3) based on the first voltage.

According to an embodiment, in operation 605, the electronic device 201, 301, or 501 may apply the input voltage corresponding to twice the first voltage, provided from the external power source 305, to the first charging circuit 510 and the second charging circuit 520. As described above, depending on a number of batteries, the value of the input voltage may be chosen to correspond to a value that is different from being twice a first voltage.

According to an embodiment, in operation 607, the electronic device 201, 301, or 501 may control the first charging circuit 510 to supply power of the first voltage to the first battery 281. In operation 609, according to an embodiment, the electronic device 201, 301, or 501 may control the second charging circuit 520 to supply power of a second voltage to the second battery 282. For example, operation 607 and operation 609 may be performed sequentially or in parallel. However, when operation 607 and operation 609 are performed sequentially, their order may be changed.

As described above, the electronic device 201, 301, or 501 according to an embodiment may independently drive the first charging circuit 510 and the second charging circuit 520. Further, the electronic device 201, 301, or 501 may charge the first battery 281 and the second battery 282 through the first charging circuit 510 and the second charging circuit 520, respectively. For example, the first limiter 284 (or the plurality of switches 551 and 552 included in the first limiter 284) may be controlled to the off state during a normal charging operation. However, when a specific condition is satisfied, the first limiter 284 (or the plurality of switches 551 and 552 included in the first limiter 284) may be controlled to the on state.

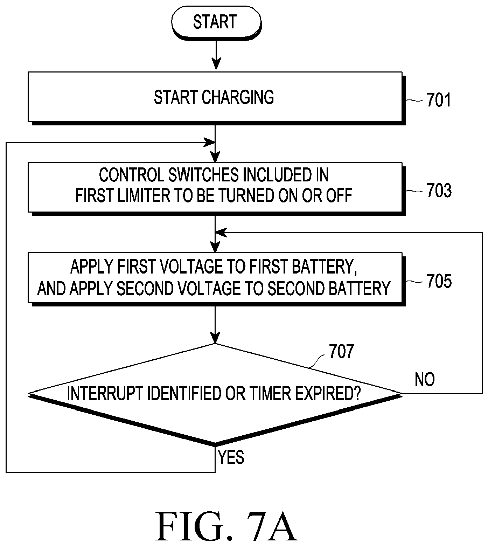

FIG. 7A is a flowchart illustrating an operation of turning on or off a switch in a limiter, when a plurality of batteries are charged in an electronic device according to an embodiment.

Referring to FIG. 7A, in operation 701, the electronic device 201, 301, or 501 may start charging the plurality of batteries 281 and 282 according to an embodiment.

In operation 703, according to an embodiment, the electronic device 201, 301, or 501 may control the plurality of switches 551 and 552 included in the first limiter 284 to be turned on or off. For example, the electronic device 201, 301, or 501 may identify an off condition for the first limiter 284 and/or an on condition for the first limiter 284. The electronic device 201, 301, or 501 may control the plurality of switches 551 and 552 included in the first limiter 284 to be turned on or off based on a result of the identification.

According to an embodiment, in operation 705, the electronic device 201, 301, or 501 may apply a first voltage to the first battery 281 and a second voltage to the second battery 282 in a state where the plurality of switches 551 and 552 included in the first limiter 284 are controlled to be on or off.

According to an embodiment, in operation 707, the electronic device 201, 301, or 501 may identify whether there is an interrupt from the second charging circuit 520 or a specific timer has expired. For example, the interrupt may be a signal indicating a change in the state of the second charging circuit 520. The specific timer may be a timer for re-identifying the state of the plurality of switches 551 and 552.

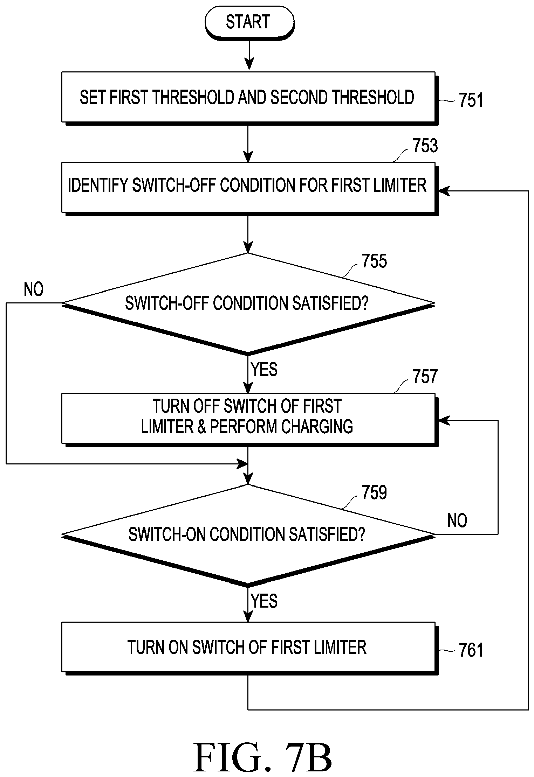

According to an embodiment, when the interrupt is not identified and the specific timer has not expired (no in operation 707), the electronic device 201, 301, or 501 may maintain the plurality of switches 551 and 552 in the existing state (e.g., the on/off state). According to an embodiment, once the interrupt is identified or the specific timer has expired (e.g., yes in operation 707), the electronic device 201, 301, or 501 may control the plurality of switches 551 and 552 to the on or off state. Referring to FIG. 7B below, the operation of identifying the off condition for the first limiter 284 and the on condition for the first limiter 284 will be described in more detail.

FIG. 7B is a flowchart illustrating an operation of turning on or off a switch in a limiter, when a plurality of batteries are charged in an electronic device according to an embodiment.

Referring to FIG. 7B, in operation 751, the electronic device 201, 301, or 501 may set a first threshold and a second threshold according to an embodiment. Alternatively, the electronic device 201, 301, or 501 may identify a preset first threshold and second threshold.

According to an embodiment, in operation 753, the electronic device 201, 301, or 501 may identify an off condition for the plurality of switches 551 and 552 included in the first limiter 284. According to an embodiment, in operation 755, the electronic device 201, 301, or 501 may identify whether the off condition for the plurality of switches 551 and 552 is satisfied.

According to an embodiment, when identifying that the off condition for the plurality of switches 551 and 552 is satisfied (yes in operation 755), the electronic device 201, 301, or 501 may turn off the plurality of switches 551 and 552 included in the first limiter 284 and perform charging on the plurality of batteries 281 and 282 in operation 757. For example, the plurality of switches 551 and 552 included in the first limiter 284 may be turned off, while the electronic device 201, 301, or 501 is performing a normal charging operation.

When identifying that the off condition for the plurality of switches 551 and 552 included in the first limiter 284 is not satisfied (no in operation 755), the electronic device 201, 301, or 501 may identify whether the on condition for the plurality of switches 551 and 552 included in the first limiter 284 is satisfied in operation 759. For example, the switch-on condition may refer to a situation where while a current applied to a system becomes greater than a current applied to the second charging circuit 520 or the external power source 305 is detached from the electronic device 201, 301, or 501 during a charging operation in the electronic device 201, 301, or 501. For example, in the situations, the voltage of the first battery 281 may need to be applied to the system to maintain a voltage applied to the system. Since the voltage of the first battery 281 may not be applied to the system in the off state of the first limiter 284, the first limiter 284 may be switched to the on state, when the on condition for the plurality of switches 551 and 552 included in the first limiter 284 is satisfied.

According to an embodiment, when identifying that the on condition for the plurality of switches 551 and 552 included in the first limiter 284 is satisfied (yes in operation 759), the electronic device 201, 301, or 501 may turn on the plurality of switches 551 and 552 included in the first limiter 284 in operation 761. At this time, the electronic device 201, 301, or 501 may not perform the charging operation.

According to an embodiment, when identifying that the on condition for the plurality of switches 551 and 552 included in the first limiter 284 is not satisfied (no in operation 759), the electronic device 201, 301, or 501 may turn off the plurality of switches 551 and 552 included in the first limiter 284 and perform charging on the plurality of batteries 281 and 282. Alternatively, the electronic device 201, 301, or 501 may turn off the plurality of switches 551 and 552 included in the first limiter 284 and discontinue the charging operation.

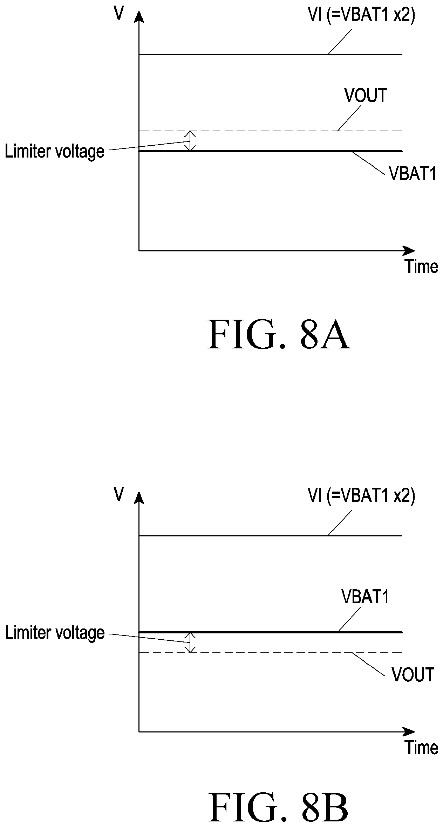

FIGs. 8A and 8B are graphs depicting an input voltage of a first charging circuit and a second charging circuit, an output voltage of the first charging circuit, and an output voltage of the second charging circuit according to an embodiment.

Referring to FIGs. 8A and 8B, the electronic device 201, 301, or 501 may receive power of the input voltage VI from the external power source 305 according to an embodiment. The processor 220 may request power of the input voltage VI corresponding to twice the first voltage VBAT1 to be applied to the first battery 281 from the external power source 305. The first charging circuit 510 and the second charging circuit 520 may receive the power of the input voltage VI from the external power source 305. The first charging circuit 510 may output the first voltage VBAT1 corresponding to half of the input voltage VI to the first battery 281. The second charging circuit 520 may output the output voltage VOUT based on the input voltage VI. A limiter voltage may be applied to both ends of the first limiter 284 disposed between the second charging circuit 520 and the first battery 281. For example, the limiter voltage may correspond to the difference between the output voltage VOUT and the first voltage VBAT1.

According to an embodiment, when the output voltage VOUT is higher than the first voltage VBAT1, the limiter voltage may have a positive value, as illustrated in FIG. 8A. Alternatively, when the output voltage VOUT is lower than the first voltage VBAT1, the limiter voltage may have a negative value, as illustrated in FIG. 8B.

The on/off condition for the first limiter 284 (or the on/off condition for the plurality of switches 551 and 552 included in the first limiter 284) will be described below on the assumption that the limiter voltage has a positive value. However, the technical idea of the disclosure may not be limited thereto. For example, when the limiter voltage has a negative value, the on/off condition for the first limiter 284 (or the on/off condition for the plurality of switches 551 and 552 included in the first limiter 284) may be equally or similarly applicable. For a limiter voltage having a negative value, the first threshold and the second threshold may be set to be equal to or different from the first threshold and the second threshold for a limiter voltage having a positive value.

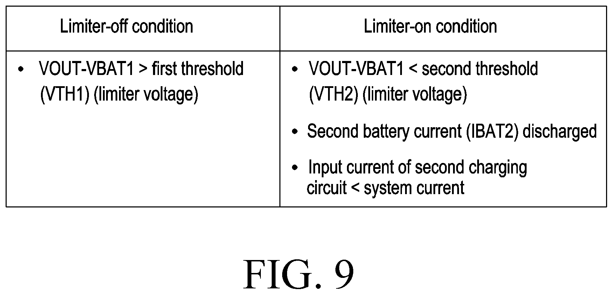

FIG. 9 is a table listing conditions under which an electronic device turns on or off a switch in a limiter according to an embodiment.

Referring to FIG. 9, according to an embodiment, a limiter-off condition may refer to a state in which the electronic device 201, 301, or 501 performs a normal charging operation. For example, when the difference between the output voltage VOUT output from the second charging circuit 520 and the first voltage VBAT1 output from the first charging circuit 510 is greater than the first threshold VTH1, the electronic device 201, 301, or 501 may determine that the limiter-off condition is satisfied. When determining that the limiter-off condition is satisfied, the electronic device 201, 301, or 501 may control the plurality of switches 551 and 552 included in the first limiter 284 to the off state.

According to an embodiment, a limiter-on condition may refer to a state in which a current applied to the systems 311 and 312 becomes greater than a current applied to the second charging circuit 520 or the external power source 305 is detached from the electronic device 201, 301, or 501 during a charging operation in the electronic device 201, 301, or 501. For example, when the difference between the output voltage VOUT output from the second charging circuit 520 and the first voltage VBAT1 output from the first charging circuit 510 is less than the second threshold VTH2, the electronic device 201, 301, or 501 may determine that the limiter-on condition is satisfied. When the second battery current IBAT2 flowing in the second battery 282 is discharged, the electronic device 201, 301, or 501 may determine that the limiter-on condition is satisfied. For example, when the second battery 282 is discharged (e.g., when the external power source 305 is detached from the electronic device 201, 301, or 501), the second battery current IBAT2 may be discharged. Further, when an input current of the second charging circuit 510 is less than a current applied to the systems 311 and 312, the electronic device 201, 301, or 501 may determine that the limiter-on condition is satisfied. For example, when any one of the three conditions described above is satisfied, the electronic device 201, 301, or 501 may determine that the limiter-on condition is satisfied. When determining that the limiter-on condition is satisfied, the electronic device 201, 301, or 501 may control the plurality of switches 551 and 552 included in the first limiter 284 to the on state.

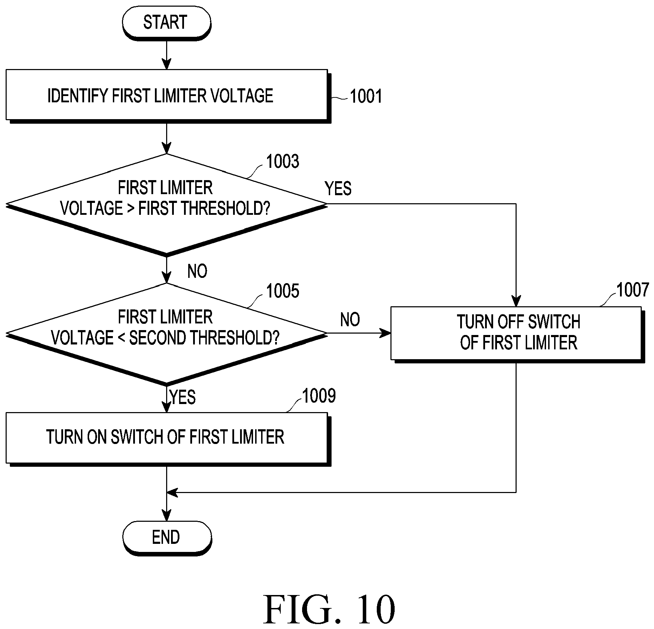

With reference to FIGS. 10 to 12, methods of turning on or off switches included in a limiter by the electronic device 201, 301, or 501 will be described below.

FIG. 10 is a flowchart illustrating an operation of turning on or off a switch in a limiter based on a limiter voltage in an electronic device according to an embodiment.

Referring to FIG. 10, according to an embodiment, the electronic device 201, 301, or 501 may identify a limiter voltage applied to both ends of the first limiter 284 in operation 1001.

In operation 1003, according to an embodiment, the electronic device 201, 301, or 501 may identify whether the limiter voltage is greater than a first threshold. For example, the first threshold may have a positive value. The first threshold may be preset by the processor 220.

According to an embodiment, when identifying that the limiter voltage is greater than the first threshold (yes in operation 1003), the electronic device 201, 301, or 501 may control the plurality of switches 551 and 552 included in the first limiter 284 to the off state in operation 1007.

According to an embodiment, when identifying that the limiter voltage is not greater than the first threshold (no in operation 1003), the electronic device 201, 301, or 501 may identify whether the limiter voltage is less than a second threshold in operation 1005. For example, the second threshold may be less than the first threshold. For example, the second threshold may have a positive value. The second threshold may be preset by the processor 220.

According to an embodiment, when identifying that the limiter voltage is not less than the second threshold (no in operation 1005), the electronic device 201, 301, or 501 may control the plurality of switches 551 and 552 included in the first limiter 284 to the off state in operation 1007.

According to an embodiment, when identifying that the limiter voltage is less than the second threshold (yes in operation 1005), the electronic device 201, 301, or 501 may control the plurality of switches 551 and 552 included in the first limiter 284 to the on state in operation 1009.

According to another embodiment, the electronic device 201, 301, or 501 may perform operation 1005 without performing operation 1003. In this case, the electronic device 201, 301, or 501 may control the plurality of switches 551 and 552 included in the first limiter 284 to the on or off state based on whether the limiter voltage is less than the second threshold.

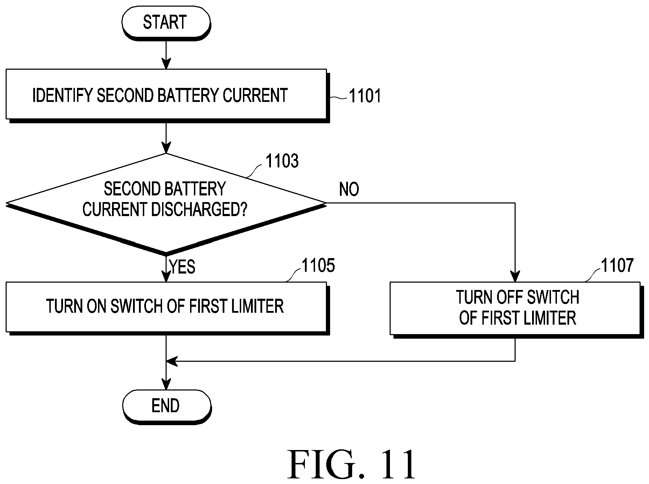

FIG. 11 is a flowchart illustrating an operation of turning on or off a switch in a limiter based on a second battery current in an electronic device according to an embodiment.

Referring to FIG. 11, according to an embodiment, the electronic device 201, 301, or 501 may identify the second battery current IBAT2 applied to the second battery 282 in operation 1101.

In operation 1103, according to an embodiment, the electronic device 201, 301, or 501 may identify whether the second battery current IBAT2 is discharged. For example, the discharge of the second battery current IBAT2 may refer to a state in which a current discharged from the second battery 282 is greater than a current applied to the second battery 282.

According to an embodiment, when identifying that the second battery current IBAT2 is discharged (e.g., yes in operation 1103), the electronic device 201, 301, or 501 may control the plurality of switches 551 and 552 included in the first limiter 284 to the on state in operation 1105.

According to an embodiment, when identifying that the second battery current IBAT2 is not discharged (no in operation 1103), the electronic device 201, 301, or 501 may control the plurality of switches 551 and 552 included in the first limiter 284 to the off state in operation 1107.

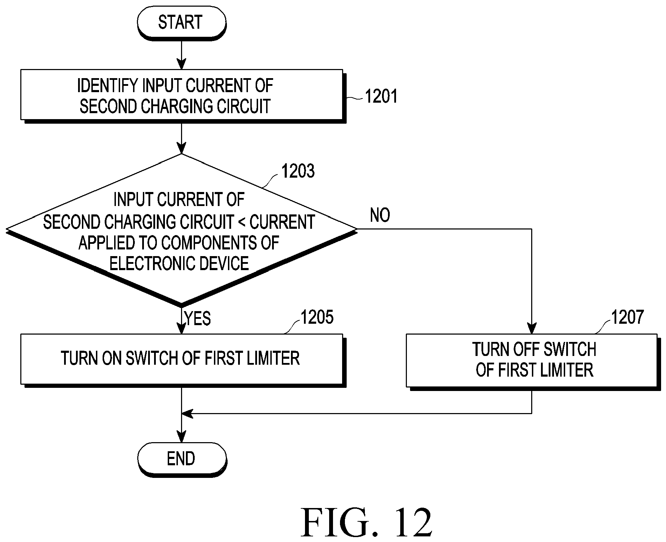

FIG. 12 is a flowchart illustrating an operation of turning on or off a switch in a limiter based on an input current of a second charging circuit in an electronic device according to an embodiment.

According to an embodiment, in operation 1201, the electronic device 201, 301, or 501 may identify the input current VI applied to the second charging circuit 520.

According to an embodiment, in operation 1203, the electronic device 201, 301, or 501 may identify whether the input current VI of the second charging circuit 520 is less than a current applied to components (e.g., the systems 311 and 312 of FIG. 3) of the electronic device 201, 301, or 501.

According to an embodiment, when identifying that the input current VI of the second charging circuit 520 is less than the current applied to the components (e.g., the systems 311 and 312 of FIG. 3) of the electronic device 201, 301, or 501, the electronic device 201, 301, or 501 may control the plurality of switches 551 and 552 included in the first limiter 284 to the on state in operation 1203.

According to an embodiment, when identifying that the input current VI of the second charging circuit 520 is not less than the current applied to the components (e.g., the systems 311 and 312 of FIG. 3) of the electronic device 201, 301, or 501 (no in operation 1203), the electronic device 201, 301, or 501 may control the plurality of switches 551 and 552 included in the first limiter 284 to the off state in operation 1207.

According to an embodiment, when any one of on conditions for the plurality of switches 551 and 552 included in the first limiter 284, described with reference to FIGS. 10 to 12, is satisfied, the electronic device 201, 301, or 501 may control the plurality of switches 551 and 552 included in the first limiter 284 to the on state.

The electronic device 201, 301, or 501 according to an embodiment may include the first battery 281, the second battery 282, the first charging circuit 510 configured to provide power of a first voltage to the first battery, the second charging circuit 520 configured to provide power of a second voltage to the second battery, the first limiter 284 disposed between the first battery and the second charging circuit, and the processor 220. The processor according to an embodiment may be configured to identify the first voltage to be applied to the first battery. The processor according to an embodiment may be configured to request power of an input voltage corresponding to twice the first voltage from the external power source 305 based on the first voltage. The processor according to an embodiment may be configured to, based on applying the input voltage corresponding to twice the first voltage provided from the external power source to the first charging circuit, control the first charging circuit to supply the power of the first voltage to the first battery. The processor according to an embodiment may be configured to, based on applying the input voltage corresponding to twice the first voltage provided from the external power source to the second charging circuit, control the second charging circuit to supply the power of the second voltage to the second battery.

The processor according to an embodiment may be configured to control a plurality of switches included in the first limiter to be turned on or off based on at least one of a limiter voltage applied to both ends of the first limiter, a current applied to the second battery, or a state of the second charging circuit.

The processor according to an embodiment may be configured to identify the limiter voltage applied to both ends of the first limiter, based on the first voltage output through the first charging circuit and an output voltage of the second charging circuit.

The processor according to an embodiment may be configured to control the first limiter to turn off the plurality of switches included in the first limiter, based on identifying that the limiter voltage is greater than a first threshold.

The processor according to an embodiment may be configured to control the first limiter to turn on the plurality of switches included in the first limiter, based on identifying that the limiter voltage is less than a second threshold.

The processor according to an embodiment may be configured to control the first limiter to turn on the plurality of switches included in the first limiter, based on identifying that the current applied to the second battery is discharged.

The processor according to an embodiment may be configured to control the first limiter to turn on the plurality of switches included in the first limiter, based on identifying that a magnitude of a current provided from the external power source to the second charging circuit is less than a magnitude of a current applied to components of the electronic device.

The first charging circuit includes a direct current/direct current (DC/DC) converter configured to be unable to adjust an output voltage thereof. The second charging circuit includes a DC/DC converter configured to be able to adjust an output voltage thereof.

The processor according to an embodiment may be configured to control the output voltage of the second charging circuit to apply the second voltage to the second battery.

The first charging circuit according to an embodiment may include a direct charger. The second charging circuit according to an embodiment may include a resonant direct charger.

A method of operating the electronic device 201, 301, or 501 including the first battery 281 and the second battery 282 according to an embodiment may include identifying a first voltage to be applied to the first battery. The method of operating the electronic device according to an embodiment may include requesting power of an input voltage corresponding to twice the first voltage from the external power source 305 based on the first voltage. The method of operating the electronic device according to an embodiment may include, based on applying the input voltage corresponding to twice the first voltage provided from the external power source to the first charging circuit 510 included in the electronic device, controlling the first charging circuit to supply power of the first voltage to the first battery. The method of operating the electronic device according to an embodiment may include, based on applying the input voltage corresponding to twice the first voltage provided from the external power source to the second charging circuit 520 included in the electronic device, controlling the second charging circuit to supply power of a second voltage to the second battery.

The method of operating the electronic device according to an embodiment may further include controlling a plurality of switches included in the first limiter 284 disposed between the second charging circuit and the first battery to be turned on or off based on at least one of a limiter voltage applied to both ends of the first limiter, a current applied to the second battery, or a state of the second charging circuit.

The method of operating the electronic device according to an embodiment may further include identifying the limiter voltage applied to both ends of the first limiter, based on the first voltage output through the first charging circuit and an output voltage of the second charging circuit.

Controlling the plurality of switches to be turned on or off according to an embodiment may include controlling the first limiter to turn off the plurality of switches included in the first limiter, based on identifying that the limiter voltage is greater than a first threshold.

Controlling the plurality of switches to be turned on or off according to an embodiment may include controlling the first limiter to turn on the plurality of switches included in the first limiter, based on identifying that the limiter voltage is less than a second threshold.

Controlling the plurality of switches to be turned on or off according to an embodiment may include controlling the plurality of switches to be turned on or off comprises controlling the first limiter to turn on the plurality of switches included in the first limiter, based on identifying that the current applied to the second battery is discharged.

Controlling the plurality of switches to be turned on or off according to an embodiment may include controlling the plurality of switches to be turned on or off comprises controlling the first limiter to turn on the plurality of switches included in the first limiter, based on identifying that a magnitude of a current provided from the external power source to the second charging circuit is less than a magnitude of a current applied to components of the electronic device.

The first charging circuit includes a direct current/direct current (DC/DC) converter configured to be unable to adjust an output voltage thereof. The second charging circuit includes a DC/DC converter configured to be able to adjust an output voltage thereof.

The method of operating the electronic device according to an embodiment may further include controlling the output voltage of the second charging circuit to apply the second voltage to the second battery.

The non-transitory recording medium 130 according to an embodiment may store instructions capable of executing a method, the method comprising identifying a first voltage to be applied to the first battery 281 included in the electronic device 201, 301, or 501, requesting power of an input voltage corresponding to twice the first voltage from the external power source 305 based on the first voltage, based on applying the input voltage corresponding to twice the first voltage provided from the external power source to the first charging circuit 510 included in the electronic device, controlling the first charging circuit to supply power of the first voltage to the first battery, and based on applying the input voltage corresponding to twice the first voltage provided from the external power source to the second charging circuit 520 included in the electronic device, controlling the second charging circuit to supply power of a second voltage to a second battery (282) included in the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (201, 301, 501) comprising:

   a first battery (281);
   a second battery (282);
   a first charging circuit (510) configured to provide power of a first voltage to the first battery;
   a second charging circuit (520) configured to provide power of a second voltage to the second battery;
   a first limiter (284) disposed between the first battery and the second charging circuit; and
   a processor (220),
   wherein the processor is configured to:

      identify the first voltage to be applied to the first battery,
      request power of an input voltage corresponding to twice the first voltage from an external power source (305) based on the first voltage,

based on applying the input voltage corresponding to twice the first voltage provided from the external power source to the first charging circuit, control the first charging circuit to supply the power of the first voltage to the first battery, and

based on applying the input voltage corresponding to twice the first voltage provided from the external power source to the second charging circuit, control the second charging circuit to supply the power of the second voltage to the second battery.

2. The electronic device of claim 1, wherein the processor is configured to control a plurality of switches included in the first limiter to be turned on or off based on at least one of a limiter voltage applied to both ends of the first limiter, a current applied to the second battery, or a state of the second charging circuit.

3. The electronic device of any one of claims 1 and 2, wherein the processor is configured to identify the limiter voltage applied to both ends of the first limiter, based on the first voltage output through the first charging circuit and an output voltage of the second charging circuit.

4. The electronic device of any one of claims 1 to 3, wherein the processor is configured to control the first limiter to turn off the plurality of switches included in the first limiter, based on identifying that the limiter voltage is greater than a first threshold.

5. The electronic device of any one of claims 1 to 4, wherein the processor is configured to control the first limiter to turn on the plurality of switches included in the first limiter, based on identifying that the limiter voltage is less than a second threshold.

6. The electronic device of any one of claims 1 to 5, wherein the processor is configured to control the first limiter to turn on the plurality of switches included in the first limiter, based on identifying that the current applied to the second battery is discharged.

7. The electronic device of any one of claims 1 to 6, wherein the processor is configured to control the first limiter to turn on the plurality of switches included in the first limiter, based on identifying that a magnitude of a current provided from the external power source to the second charging circuit is less than a magnitude of a current applied to components of the electronic device.

8. The electronic device of any one of claims 1 to 7, wherein the first charging circuit includes a direct current/direct current (DC/DC) converter configured to be unable to adjust an output voltage thereof, and wherein the second charging circuit includes a DC/DC converter configured to be able to adjust an output voltage thereof.

9. The electronic device of any one of claims 1 to 8, wherein the processor is configured to control the output voltage of the second charging circuit to apply the second voltage to the second battery.

10. The electronic device of any one of claims 1 to 9, wherein the first charging circuit includes a direct charger, and wherein the second charging circuit includes a resonant direct charger.

11. A method of operating an electronic device (201, 301, 501) including a first battery (281) and a second battery (282), the method comprising:

identifying a first voltage to be applied to the first battery;

requesting power of an input voltage corresponding to twice the first voltage from an external power source (305) based on the first voltage;

based on applying the input voltage corresponding to twice the first voltage provided from the external power source to a first charging circuit (510) included in the electronic device, controlling the first charging circuit to supply power of the first voltage to the first battery; and

based on applying the input voltage corresponding to twice the first voltage provided from the external power source to a second charging circuit (520) included in the electronic device, controlling the second charging circuit to supply power of a second voltage to the second battery.

12. The method of claim 11, further comprising controlling a plurality of switches included in a first limiter (284) disposed between the second charging circuit and the first battery to be turned on or off based on at least one of a limiter voltage applied to both ends of the first limiter, a current applied to the second battery, or a state of the second charging circuit.

13. The method of any one of claims 11 and 12, further comprising identifying the limiter voltage applied to both ends of the first limiter, based on the first voltage output through the first charging circuit and an output voltage of the second charging circuit.

14. The method of any one of claims 11 to 13, wherein controlling the plurality of switches to be turned on or off comprises controlling the first limiter to turn off the plurality of switches included in the first limiter, based on identifying that the limiter voltage is greater than a first threshold.

15. The method of any one of claims 11 to 14, wherein controlling the plurality of switches to be turned on or off comprises controlling the first limiter to turn on the plurality of switches included in the first limiter, based on identifying that the limiter voltage is less than a second threshold.

FIG. 1

201

277
Wired interface

280
Charging circuit

288
PMIC

290
System

292
Wireless charging IC

291
Coil

220
Processor

284
First limiter

285
Second limiter

281
First battery

282
Second battery

FIG. 2

305 External power source

310 OVP

305 External power source → 310 OVP

301

388 Third charging circuit

Charging circuit
First charging circuit
Second charging circuit
380

220 Processor

311 First system
312 Second system

FPCB
RF
RF

285 Second limiter
282 Second battery

284 First limiter
281 First battery

FIG. 3

401

480

Charging
circuit

V0

RF

484

First limiter

485

Second
limiter

V1

V2

481

First battery

482

Second
battery

(a)

401

480

Charging
circuit

V0

RF

RFET1

IBAT1

RFET2

V1

V2

481

First battery

482

Second
battery

(b)

FIG. 4

FIG. 5A

EP 4 395 115 A1

FIG. 5B

START

IDENTIFY FIRST VOLTAGE TO BE
APPLIED TO FIRST BATTERY — 601

REQUEST POWER OF INPUT VOLTAGE CORRESPONDING
TWICE FIRST VOLTAGE FROM EXTERNAL
POWER SOURCE BASED ON FIRST VOLTAGE — 603

APPLY INPUT VOLTAGE CORRESPONDING TWICE
FIRST VOLTAGE, PROVIDED FROM EXTERNAL
POWER SOURCE, TO FIRST CHARGING
CIRCUIT AND SECOND CHARGING CIRCUIT — 605

CONTROL FIRST CHARGING CIRCUIT TO SUPPLY
POWER OF FIRST VOLTAGE TO FIRST BATTERY — 607

CONTROL SECOND CHARGING CIRCUIT TO SUPPLY
POWER OF SECOND VOLTAGE TO SECOND BATTERY — 609

END

FIG. 6

START

START CHARGING ⟞ 701

CONTROL SWITCHES INCLUDED IN
FIRST LIMITER TO BE TURNED ON OR OFF ⟞ 703

APPLY FIRST VOLTAGE TO FIRST BATTERY,
AND APPLY SECOND VOLTAGE TO SECOND BATTERY ⟞ 705

707

INTERRUPT IDENTIFIED OR TIMER EXPIRED?     NO

YES

# FIG. 7A

START

SET FIRST THRESHOLD AND SECOND THRESHOLD — 751

753

IDENTIFY SWITCH-OFF CONDITION FOR FIRST LIMITER

755

NO

SWITCH-OFF CONDITION SATISFIED?

YES

757

TURN OFF SWITCH OF FIRST
LIMITER & PERFORM CHARGING

759

SWITCH-ON CONDITION SATISFIED?

NO

YES

TURN ON SWITCH OF FIRST LIMITER — 761

FIG. 7B

FIG. 8A

FIG. 8B

| Limiter-off condition | Limiter-on condition |
|---|---|
| • VOUT-VBAT1 > first threshold (VTH1) (limiter voltage) | • VOUT-VBAT1 < second threshold (VTH2) (limiter voltage)<br><br>• Second battery current (IBAT2) discharged<br><br>• Input current of second charging circuit < system current |

# FIG. 9

START

IDENTIFY FIRST LIMITER VOLTAGE — 1001

1003

FIRST LIMITER
VOLTAGE > FIRST THRESHOLD?

YES

NO

1005

FIRST LIMITER
VOLTAGE < SECOND THRESHOLD?

NO

1007

TURN OFF SWITCH
OF FIRST LIMITER

YES

1009

TURN ON SWITCH OF FIRST LIMITER

END

FIG. 10

START

IDENTIFY SECOND BATTERY CURRENT ──1101

SECOND BATTERY
CURRENT DISCHARGED? ──1103

NO

YES ──1105

TURN ON SWITCH OF FIRST LIMITER

TURN OFF SWITCH
OF FIRST LIMITER ──1107

END

FIG. 11

**FIG. 12**

## INTERNATIONAL SEARCH REPORT

| | International application No. |
|---|---|
| | **PCT/KR2023/017682** |

| A. | CLASSIFICATION OF SUBJECT MATTER |
|---|---|

**H02J 7/00**(2006.01)i; **H01M 10/44**(2006.01)i; **H02M 3/00**(2006.01)i

According to International Patent Classification (IPC) or to both national classification and IPC

| B. | FIELDS SEARCHED |
|---|---|

Minimum documentation searched (classification system followed by classification symbols)

H02J 7/00(2006.01); G06F 1/26(2006.01); H01M 10/48(2006.01); H02J 7/34(2006.01); H04M 1/725(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 충전 회로(charging circuit), 듀얼 배터리(dual battery), 스위치(switch), 입력 전압 (input voltage), 컨버터(converter)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2020-0012105 A (SAMSUNG ELECTRONICS CO., LTD.) 05 February 2020 (2020-02-05)<br>See paragraphs [0064]-[0086]; and figures 4-5. | 1-15 |
| A | KR 10-2020-0136594 A (SAMSUNG ELECTRONICS CO., LTD.) 08 December 2020 (2020-12-08)<br>See paragraphs [0081]-[0087]; and figures 6a-6c. | 1-15 |
| A | KR 10-2022-0127722 A (SAMSUNG ELECTRONICS CO., LTD. et al.) 20 September 2022 (2022-09-20)<br>See paragraphs [0032]-[0037]. | 1-15 |
| A | JP 2020-058220 A (INTEL CORP) 09 April 2020 (2020-04-09)<br>See entire document. | 1-15 |
| A | US 9812878 B1 (AMAZON TECHNOLOGIES, INC.) 07 November 2017 (2017-11-07)<br>See entire document. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/017682**

| Patent document cited in search report | | | Publication date (day/month/year) | Patent family member(s) | | | Publication date (day/month/year) |
|---|---|---|---|---|---|---|---|
| KR | 10-2020-0012105 | A | 05 February 2020 | CN | 112470453 | A | 09 March 2021 |
| | | | | CN | 112470453 | B | 22 August 2023 |
| | | | | EP | 3640762 | A1 | 22 April 2020 |
| | | | | US | 11283270 | B2 | 22 March 2022 |
| | | | | US | 2020-0036198 | A1 | 30 January 2020 |
| | | | | WO | 2020-022685 | A1 | 30 January 2020 |
| KR | 10-2020-0136594 | A | 08 December 2020 | CN | 113892222 | A | 04 January 2022 |
| | | | | EP | 3942670 | A1 | 26 January 2022 |
| | | | | US | 11742753 | B2 | 29 August 2023 |
| | | | | US | 2020-0381994 | A1 | 03 December 2020 |
| | | | | WO | 2020-242209 | A1 | 03 December 2020 |
| KR | 10-2022-0127722 | A | 20 September 2022 | CN | 115084677 | A | 20 September 2022 |
| | | | | US | 2022-0294236 | A1 | 15 September 2022 |
| JP | 2020-058220 | A | 09 April 2020 | CN | 110970968 | A | 07 April 2020 |
| | | | | EP | 3629441 | A1 | 01 April 2020 |
| | | | | JP | 7386644 | B2 | 27 November 2023 |
| | | | | US | 10862316 | B2 | 08 December 2020 |
| | | | | US | 11495978 | B2 | 08 November 2022 |
| | | | | US | 2019-0081487 | A1 | 14 March 2019 |
| | | | | US | 2021-0167611 | A1 | 03 June 2021 |
| US | 9812878 | B1 | 07 November 2017 | US | 10312697 | B1 | 04 June 2019 |

Form PCT/ISA/210 (patent family annex) (July 2022)